# EUROPÄISCHE PATENTSCHRIFT

(11) **EP 3 453 247 B1**
(45) Veröffentlichungstag und Bekanntmachung des Hinweises auf die Patenterteilung: **20.05.2020**
(21) Anmeldenummer: 18192249.3
(22) Anmeldetag: 03.09.2018
(51) Int. Cl.: A01D 78/10

(54) **HEUWERBUNGSMASCHINE**
HAYMAKING MACHINE
MACHINE DE FENAISON

(30) Priorität: 06.09.2017 DE 102017120469
(43) Veröffentlichungstag der Anmeldung: 13.03.2019
(73) Patentinhaber: CLAAS Saulgau GmbH, 88348 Bad Saulgau (DE)
(72) Erfinder: Speer, Christian, 78267 Aach (DE)

(56) Entgegenhaltungen:
- DE-A1-102007 035 407
- DE-U1- 9 015 320
- US-A1- 2004 107 687

## Beschreibung

Die Erfindung betrifft eine Heuwerbungsmaschine, insbesondere einen Kreiselschwader, nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt. Bei der erfindungsgemäßen Heuwerbungsmaschine handelt es sich insbesondere um einen Kreiselschwader, besonders bevorzugt um einen Vier-Kreiselschwader, der das Erntegut zur Mitte hin fördert. Eine erfindungsgemäße Heuwerbungsmaschine kann selbstverständlich auch als Sechs-Kreiselschwader ausgeführt sein.

Aus der DE 10 2007 035 407 A1 ist eine Heuwerbungsmaschine mit einem Grundgestell, einem Fahrwerk und mit Rechkreiseln bekannt. Das Grundgestell verfügt über einen Längsholm, der über eine Kupplungseinrichtung an ein Zugfahrzeug ankoppelbar ist. Das Fahrwerk verfügt über Laufräder, über die sich das Fahrwerk auf einem zu bearbeitenden Untergrund abstützt. Das Grundgestell stützt sich über den Längsholm am Fahrwerk ab. Die Rechkreisel sind am Maschinengestell mittels eines Auslegearms schwenkbar bzw. klappbar angelenkt. So kann der jeweilige Rechkreisel zwischen einer Arbeitsstellung und einer Transportstellung verlagert werden. Jeder Rechkreisel der Heuwerbungsmaschine stützt sich in seiner Arbeitsstellung über Tast- und Stützräder auf dem zu bearbeitenden Untergrund ab.

Aus der DE 10 2007 035 407 A1 ist es weiterhin bekannt, dass die Heuwerbungsmaschine einen kraftbetriebenen Mechanismus aufweist, um zur Reduzierung der Transporthöhe der Heuwerbungsmaschine das Fahrwerk und das Grundgestell relativ zueinander zu verlagern, und zwar zwischen einer Transportstellung und einer Arbeitsstellung das Grundgestell bzw. das Fahrgestell anzuheben bzw. abzusenken. Hierzu sind Holme des Fahrwerks der Heuwerbungsmaschine über einen Betätigungszylinder um eine Achse schwenkbar, die sich quer zur Längsrichtung des Längsholms des Grundgestells erstreckt. Dabei bewegt sich dann das Fahrwerk samt den Laufrädern in Längsrichtung des Längsholms vor bzw. zurück.

Daher muss nach dem Stand der Technik zwischen einem vorderen Kreiselpaar der Rechkreisel und einem hinteren Kreiselpaar der Rechkreisel entsprechend Platz vorgehalten werden, wodurch die Kompaktheit der Heuwerbungsmaschine und die Überdeckung der Rechkreisel beeinträchtigt wird.

Hiervon ausgehend liegt der vorliegenden Erfindung die Aufgabe zugrunde, eine neuartige Heuwerbungsmaschine zu schaffen.

Diese Aufgabe wird durch eine Heuwerbungsmaschine nach Anspruch 1 gelöst.

Erfindungsgemäß sind Holme des Fahrwerks, an welchen die Laufräder des Fahrwerks angreifen bzw. angelenkt sind, über einen kraftbetriebenen Mechanismus relativ zum Längsholm des Grundgestells unter Veränderung eines sich quer zur Längsrichtung des Längsholms erstreckenden Abstands der Laufräder verlagerbar. Bei der erfindungsgemäßen Heuwerbungsmaschine sind die Holme des Fahrwerks nicht um Achsen schwenkbar, die sich quer zur Längsrichtung des Längsholms erstrecken. Daher findet in Längsrichtung des Längsholms keine Bewegung der Laufräder bzw. des Fahrwerks bei der Überführung zwischen einer abgesenkten Transportstellung, und einer angehobenen Arbeitsstellung, mehr statt. Die Kreiselpaare können daher kompakter zueinander angeordnet werden. Bei der Überführung des Fahrwerks und damit Grundgestells zwischen der abgesenkten Stellung und der angehobenen Stellung ändert sich der Abstand der Laufräder quer zur Längsrichtung des Längsholms gesehen und damit die Spurbreite des Fahrwerks. In der Arbeitsstellung liegt eine vergrößerte Spurbreite vor, sodass die Arbeitsstellung stabiler ist.

Nach einer Weiterbildung der Erfindung greift ein erster Holm des Fahrwerks, der ein erstes Laufrad trägt und an einer ersten Seite des Längsholms positioniert ist, über mindestens einen ersten Lenker, vorzugsweise über zwei erste Lenker, am Längsholm an, wobei an einem ersten Ende des oder jedes ersten Lenkers eine sich in Längsrichtung des Längsholms erstreckende Schwenkachse zwischen dem jeweiligen ersten Lenker und dem ersten Holm des Fahrwerks und an einem gegenüberliegenden zweiten Ende des oder jedes ersten Lenkers eine sich in Längsrichtung des Längsholms erstreckende Schwenkachse zwischen dem jeweiligen ersten Lenker und dem Längsholm ausgebildet ist. Dies erlaubt eine konstruktiv einfache Verlagerung von Grundgestell und Fahrwerk bei der Überführung zwischen der Transportstellung und der Arbeitsstellung.

Ein zweiter Holm des Fahrwerks, der ein zweites Laufrad trägt und an einer zweiten Seite des Längsholms positioniert ist, greift über mindestens einen zweiten Lenker, vorzugsweise über zwei zweite Lenker, am Längsholm an, wobei an einem ersten Ende des oder jedes zweiten Lenkers eine sich in Längsrichtung des Längsholms erstreckende Schwenkachse zwischen dem jeweiligen zweiten Lenker und dem zweiten Holm des Fahrwerks und an einem gegenüberliegenden zweiten Ende des oder jedes zweiten Lenkers eine sich in Längsrichtung des Längsholms erstreckende Schwenkachse zwischen dem jeweiligen zweiten Lenker und dem Längsholm ausgebildet ist. Dies erlaubt eine konstruktiv einfache Verlagerung von Grundgestell und Fahrwerk bei der Überführung zwischen der Transportstellung und der Arbeitsstellung.

Nach einer Weiterbildung der Erfindung weist der kraftbetriebene Mechanismus Aktuatoren auf, welche einerseits an den ersten und zweiten Holmen des Fahrwerks und anderseits an dem Längsholm des Grundgestells oder an einem fest mit dem Längsholm verbundenen Lasche angreifen. Dies erlaubt eine konstruktiv einfache Verlagerung von Grundgestell und Fahrwerk bei der Überführung zwischen der Transportstellung und der Arbeitsstellung.

Dann, wenn der kraftbetriebene Mechanismus das Grundgestell und das Fahrwerk von der Arbeitsstellung in die Transportstellung verlagert, senkt der Längsholm sich ab und der sich quer zur Längsrichtung des Längsholms erstreckende Abstand der Laufräder verkleinert sich. Dann, wenn der kraftbetriebene Mechanismus das Grundgestell und das Fahrwerk von der Transportstellung in die Arbeitsstellung verlagert, hebt der Längsholm sich an und der sich quer zur Längsrichtung des Längsholms erstreckende Abstand der Laufräder vergrößert sich. In der Arbeitsstellung der Heuwerbungsmaschine ist die Spurbreite vergrößert, wodurch die Arbeitsstellung stabilisiert wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer Heuwerbungsmaschine mit Rechkreiseln, Grundgestell und Fahrwerk jeweils in Arbeitsstellung;
- Fig. 2: eine perspektivische Ansicht der Heuwerbungsmaschine mit Rechkreiseln in Transportstellung sowie Grundgestell und Fahrwerk in Arbeitsstellung;
- Fig. 3: eine Rückansicht der Heuwerbungsmaschine mit Rechkreiseln in Transportstellung sowie Grundgestell und Fahrwerk in Arbeitsstellung;
- Fig. 4: ein Detail der Fig. 3;
- Fig. 5: eine Seitensicht der Heuwerbungsmaschine mit Rechkreiseln in Transportstellung sowie Grundgestell und Fahrwerk in Arbeitsstellung;
- Fig. 6: eine Seitensicht der Heuwerbungsmaschine mit Rechkreiseln, Grundgestell und Fahrwerk jeweils in Transportstellung;
- Fig. 7: eine perspektivische Ansicht der Heuwerbungsmaschine mit Rechkreiseln, Grundgestell und Fahrwerk jeweils in Transportstellung;
- Fig. 8: eine Rückansicht der Heuwerbungsmaschine mit Rechkreiseln, Grundgestell und Fahrwerk jeweils in Transportstellung; und
- Fig. 9: ein Detail der Fig. 8.

Die hier vorliegende Erfindung betrifft eine Heuwerbungsmaschine.

Die Heuwerbungsmaschine 10 verfügt über ein Grundgestell 11 mit einem Längsholm 12. Die Heuwerbungsmaschine 10 ist über den Längsholm 12, nämlich über eine Koppeleinrichtung 13 des Längsholms 12, an ein Zugfahrzeug ankoppelbar.

Die Heuwerbungsmaschine 10 verfügt weiterhin über ein Fahrwerk 14. Das Fahrwerk 14 weist Laufräder 15 auf. Das Grundgestell 11 stützt sich über den Längsholm 12 am Fahrwerk 14 und über die Laufräder 15 des Fahrwerk 14 auf einem zu bearbeitenden Untergrund ab.

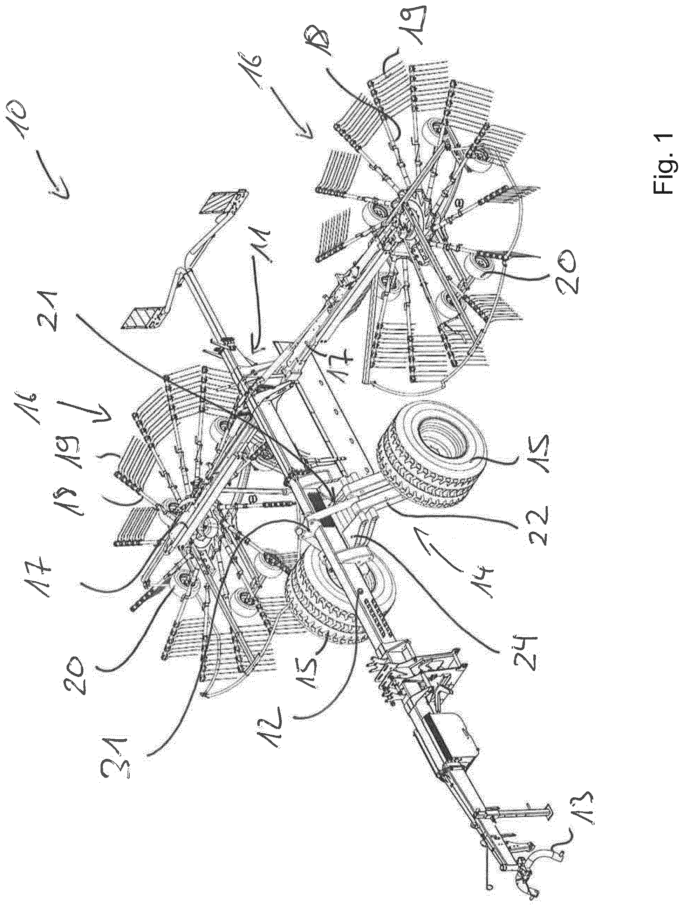

Die Heuwerbungsmaschine 10 verfügt weiterhin über Rechkreisel 16. In Fig. 1 sind zwei Rechkreisel 16 gezeigt, die ein hinteres Rechkreiselpaar bereitstellen. Zusätzlich zu diesen Rechkreiseln verfügt die Heuwerbungsmaschine 10 vorzugsweise über mindestens ein weiteres Rechkreiselpaar, welches in Fahrtrichtung gesehen vor dem in Fig. 1 gezeigten Rechkreiselpaar positioniert ist.

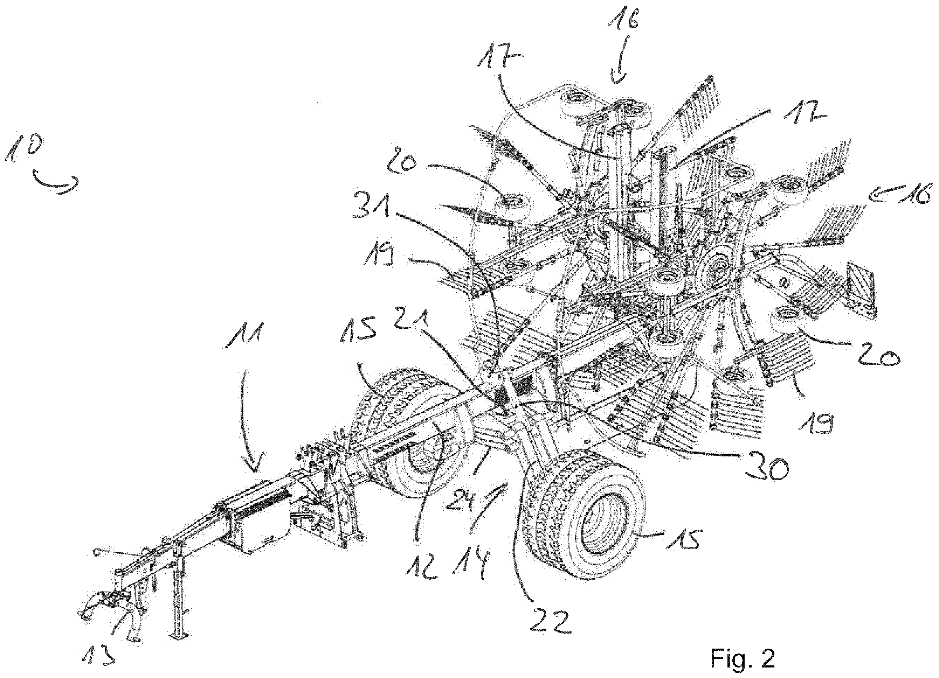

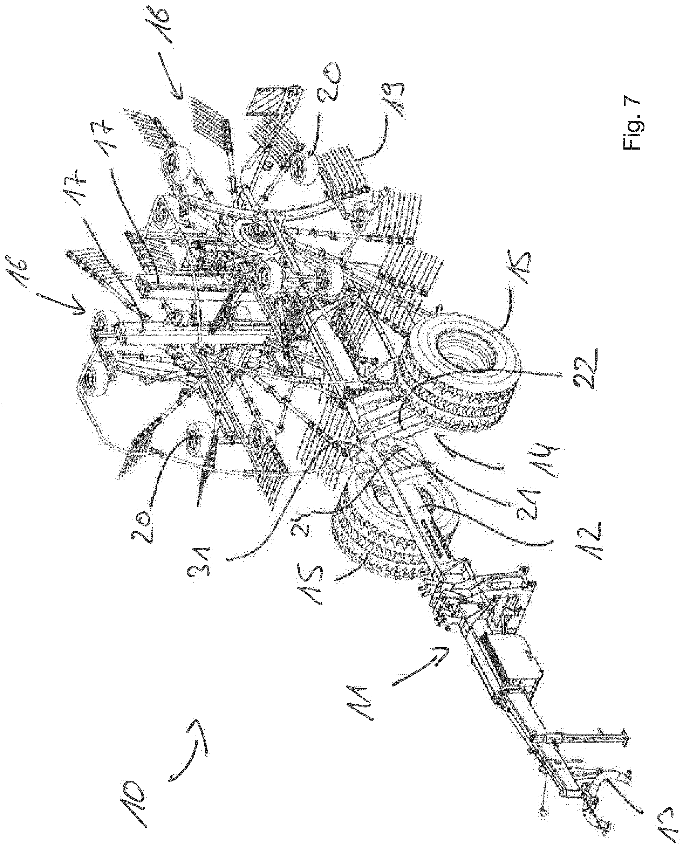

Jeder Rechkreisel 16 ist mittels eines Auslegerarms 17 am Grundgestell 11, nämlich am Längsholm 12, um ein Gelenk schwenkbar oder klappbar angelenkt. Das jeweilige Gelenk, um welches der jeweilige Arm 17 am Längsholm 12 angelenkt ist, erstreckt sich in Längsrichtung des Längsholms 12. Durch Verschwenken bzw. Klappen des jeweiligen Auslegerarms 17 um das jeweilige Gelenk bzw. die jeweilige Schwenkachse ist der jeweilige Rechkreisel 16 zwischen einer Arbeitsstellung (siehe Fig. 1) und einer Transportstellung (siehe Fig. 2, 3, 5, 6, 7 und 8) verlagerbar. Jeder Rechkreisel 16 ist um eine Kreiselachse umlaufend antreibbar und verfügt über Zinkenarme 18 mit Rechzinken 19. Jeder Rechkreisel 16 kann sich über Tast- und Stützräder 20 in der Arbeitsstellung des jeweiligen Rechkreisels 16 auf dem zu bearbeitenden Untergrund abstützen.

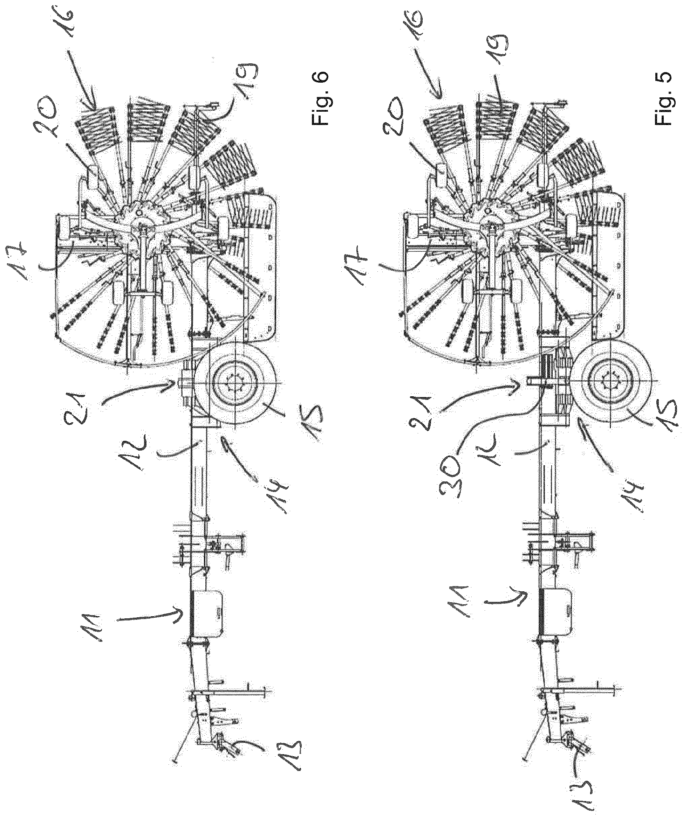

Um eine Transporthöhe sowie eine Transportbreite der Heuwerbungsmaschine 10 in der Transportstellung der Rechkreisel 16 weiter zu reduzieren, sind nicht nur die Rechkreisel 16 zwischen einer Arbeitsstellung und einer Transportstellung relativ zum Grundgestell 11 schwenkbar bzw. klappbar, vielmehr können auch das Grundgestell 11 zusammen mit den angelenkten Rechkreiseln 16 und das Fahrwerk 14 relativ zueinander zwischen einer Transportstellung und einer Arbeitsstellung verlagert, nämlich angehoben und abgesenkt, werden, und zwar über einen kraftbetriebenen Mechanismus 21. Fig. 2, 3, 4 und 5 zeigen die Heuwerbungsmaschine 10 jeweils mit in eine Transportstellung verlagerten Rechkreiseln 16, das Grundgestell 11 und Fahrwerk 14 nehmen jedoch noch eine Arbeitsstellung ein. In Fig. 6, 7, 8 und 9 nehmen auch das Grundgestell 11 und das Fahrwerk 14 eine Transportstellung ein, wodurch, wie einem Vergleich der Fig. 5 und 6 entnommen werden kann, die Transporthöhe der Heuwerbungsmaschine weiter reduziert werden kann. So weist in Fig. 6 der Längsholm 12 des Grundgestells 11 einen geringeren Abstand zu einer Drehachse der Laufräder 15 des Fahrwerks 14 und damit zu einem Untergrund auf als in Fig. 5. Zur weiteren Verringerung der Transporthöhe können zusätzlich noch nach oben ragende Zinkenarme 18 abgenommen werden. Dies ist insbesondere in den Fig. 5 und 6 erkennbar.

Das Fahrwerk 14 verfügt über Holme 22, 23. Ein erster Holm 22 des Fahrwerks 14, der ein erstes Laufrad 15 trägt, ist zusammen mit dem ersten Laufrad 15 an einer ersten Seite des Längsholms 12 positioniert. Ein zweiter Längsholm 23 des Fahrwerks 14, der in zweites Laufrad 15 trägt, ist zusammen mit dem zweiten Laufrad 15 an einer zweiten Seite des Längsholms 12 positioniert.

Die Holme 22, 23 des Fahrwerks 14, an welchen die Laufräder 15 des Fahrwerks 14 angreifen bzw. angelenkt sind, sind über den kraftbetriebenen Mechanismus 21 relativ zum Längsholm 12 des Grundgestells 11 verlagerbar, nämlich unter Veränderung eines sich quer zur Längsrichtung des Längsholms 12 erstreckenden Abstands A der Laufräder 12, der eine sogenannte Spurbreite des Fahrwerks 14 bestimmt.

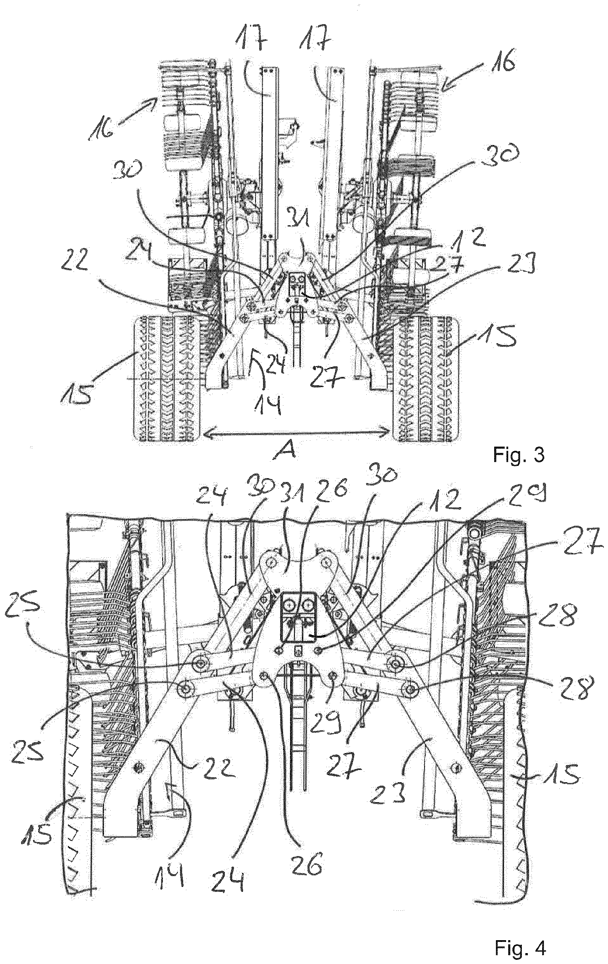

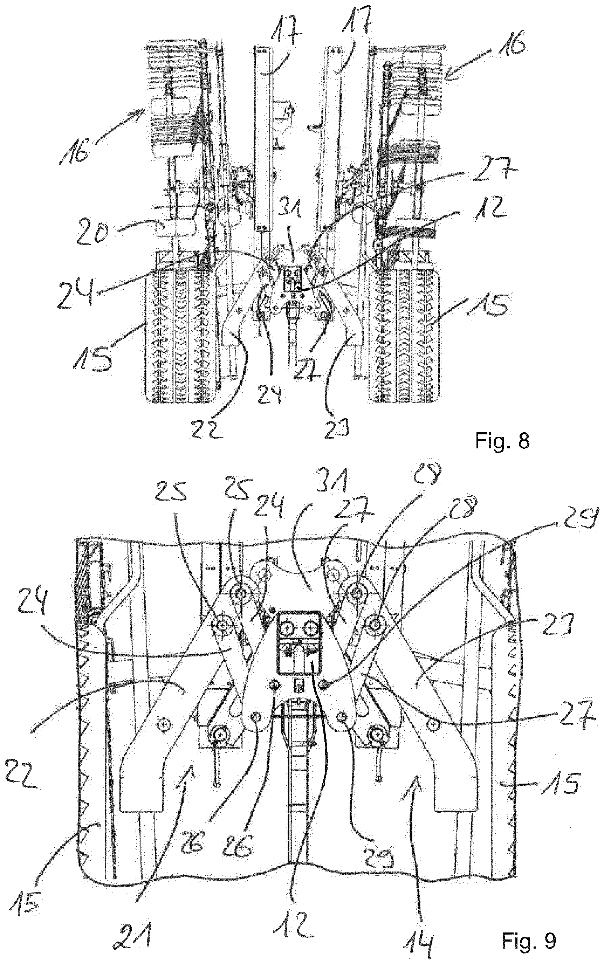

Dann, wenn Fahrwerk 14 und Grundgestell 11 ausgehend von der in Fig. 2 bis 5 gezeigten Arbeitsstellung in die in Fig. 6 bis 9 gezeigte Transportstellung verlagert werden, senkt sich (wie einem Vergleich der Fig. 4 und 9 entnommen werden kann) der Längsholm 12 des Grundgestells 11 relativ zum Fahrwerk 14, nämlich den Holmen 22, 23 des Fahrwerks 14, ab, wobei sich der quer zur Längsrichtung des Längsholms 12 erstreckende Abstand A der Laufräder 15 hierbei verkleinert. Werden hingegen das Fahrwerk 14 sowie das Grundgestell 11 ausgehend von der in Fig. 5 bis 9 gezeigten Transportstellung in die in Fig. 2 bis 6 gezeigte Arbeitsstellung verlagert, so hebt sich der Längsholm 12 des Grundgestells 11 relativ zu den Holmen 22, 23 des Fahrwerks 14 an und der sich quer zur Längsrichtung des Längsholms 12 erstreckende Abstand A der Laufräder 12 vergrößert sich.

Wie Fig. 4 und 9 entnommen werden kann, ist der erste Holm 22 des Fahrwerks 14, der das erste Laufrad 15 trägt und zusammen mit dem ersten Laufrad 15 an der ersten Seite des Längsholms 12 des Grundgestells 11 angeordnet ist, über mindestens einen, im gezeigten Ausführungsbeispiel über zwei, erste Lenker 24 am Längsholm 12 angelenkt. An einem ersten Ende des jeweiligen ersten Lenkers 24 ist eine erste Schwenkachse 25 zwischen dem jeweiligen ersten Lenker 24 und dem ersten Holm 22 des Fahrwerks 14 ausgebildet, wobei sich jede dieser Schwenkachsen 25 in Längsrichtung des Längsholms 12 erstreckt und eine Schwenkbewegung zwischen dem jeweiligen ersten Lenker 24 und dem ersten Holm 22 des Fahrwerks 14 zulässt.

An gegenüberliegenden zweiten Enden jedes ersten Lenkers 24 sind weitere Schwenkachsen 26 ausgebildet, nämlich Schwenkachsen 26 zwischen dem Längsholm 12 des Grundgestells 11 und dem jeweiligen ersten Lenker 24, die sich ebenfalls in Längsrichtung des Längsholms 12 erstrecken und eine Schwenkbewegung zwischen dem jeweiligen ersten Lenker 24 und dem Längsholm 12 zulassen.

Der zweite Holm 23 des Fahrwerks 14, der das zweite Laufrad 15 des Fahrwerks 14 trägt, und zusammen mit diesem Laufrad 15 an der zweiten Seite des Längsholms 12 angeordnet ist, ist über mindestens einen zweiten Lenker 27, im gezeigten Ausführungsbeispiel über zwei zweite Lenker 27, am Längsholm 12 des Grundgestells 11. An ersten Enden der zweiten Lenker 27 sind dabei zwischen den zweiten Lenkern 27 und dem zweiten Holm 23 des Fahrwerks 14 Schwenkachsen 28 ausgebildet, die sich in Längsrichtung des Längsholms 12 des Grundgestells 11 erstrecken und eine Schwenkbewegung zwischen dem zweiten Holm 23 und den zweiten Lenkern 27 zulassen.

An gegenüberliegenden zweiten Enden der zweiten Lenker 27 sind dieselben um Schwenkachsen 29 relativ zum Längsholm 12 des Grundgestells 11 verlagerbar, und zwar auf analoge Art und Weise wie die ersten Lenker 24.

Der kraftbetriebene Mechanismus 21 verfügt über als Druckmittelzylinder ausgebildete Aktuatoren 30. Ein erster Aktuator 30 greift einerseits am ersten Holm 22 des Fahrwerks 14 und andererseits an einer fest mit dem Längsholm 12 verbundenen Lasche 31 an. Ein zweiter Aktuator 30 greift einerseits am zweiten Holm 23 des Fahrwerks 14 und andererseits an der mit dem Längsholm 12 fest verbundenen Lasche 31 an.

Dann, wenn die Heuwerbungsmaschine vom Zustand der Fig. 2 bis 5, in welchem zwar die Rechkreisel 16 in die Arbeitsstellung verlagert sind, jedoch das Fahrwerk 14 und das Grundgestell 11 noch die Arbeitsstellung einnehmen, in den Zustand der Fig. 6 bis 9 überführt werden soll, in welcher sowohl die Rechkreisel 16 als auch das Fahrwerk 14 und das Grundgestell 11 in die Transportposition verlagert sind, werden die Druckmittelzylinder 30 eingefahren.

Bei dieser Einfahrbewegung der Druckmittelzylinder 30 senkt sich der Längsholm 12 des Grundgestells 11 in Richtung auf den Untergrund ab, ferner werden die Holme 22, 23 weiter in Richtung auf den Längsholm 12 gezogen und hierdurch der Abstand A zwischen den Laufrädern 15 verringert. Die Lenker 24 und 27 führen hierbei eine Schwenkbewegung um die sich parallel zur Längsachse des Längsholms 12 erstreckenden Schwenkachsen 25, 26, 28, 29 aus.

Soll hingegen die Heuwerbungsmaschine vom Zustand der Fig. 6 bis 9 in den Zustand der Fig. 2 bis 5 überführt werden, werden die Druckmittelzylinder 30 ausgefahren, der Längsholm 12 wird abgehoben, also weiter vom zu bearbeitenden Untergrund entfernt, die Holme 12, 13 des Fahrwerks 14 werden weiter nach außen verlagert, und zwar unter Vergrößerung des Abstands A zwischen den Laufrädern 12. Die Lenker 24 und 27 führen hierbei wieder eine Schwenkbewegung um die sich parallel zur Längsachse des Längsholms 12 erstreckenden Schwenkachsen 25, 26, 28, 29 aus.

Die Überführung der Heuwerbungsmaschine, nämlich des Fahrwerks 14 und des Grundgestells 11, zwischen der Transportstellung der Fig. 6 bis 9 und der Arbeitsstellung der Fig. 2 bis 5 erfolgt vorzugsweise während der Fahrt der durch ein Zugfahrzeug gezogenen Heuwerbungsmaschine 10. Wie bereits ausgeführt, ist in der Arbeitsstellung der Radstand, der durch den Abstand A der Laufräder 15 quer zur Längsrichtung des Längsholms 12 gesehen definiert ist, vergrößert, sodass der in der Arbeitsstellung die Heuwerbungsmaschine 10 stabilisiert ist.

Zur Stabilisierung der Heuwerbungsmaschine bei Einsatz an einem Hang, und zwar bei einer Fahrt der Heuwerbungsmaschine 10 am Hang quer zur Neigung des Hangs, kann das Fahrwerk 14 auch einseitig, und zwar an der bezogen auf den Hang oberen Seite, in die Transportstellung verlagert werden, um so an der am Hang oberen Seite der Heuwerbungsmaschine den Abstand des Laufrads 15 des Fahrwerks 14 zum Längsholm 12 zu verringern und so am Hang die Heuwerbungsmaschine 10 zu stabilisieren.

### Bezugszeichenliste

- 10: Heuwerbungsmaschine
- 11: Grundgestell
- 12: Längsholm
- 13: Koppeleinrichtung
- 14: Fahrwerk
- 15: Laufrad
- 16: Rechkreisel
- 17: Auslegerarm
- 18: Zinkenarm
- 19: Rechzinken
- 20: Tast- und Stützrad
- 21: kraftbetriebener Mechanismus
- 22: erster Holm
- 23: zweiter Holm
- 24: erster Lenker
- 25: Schwenkachse
- 26: Schwenkachse
- 27: zweiter Lenker
- 28: Schwenkachse
- 29: Schwenkachse
- 30: Aktuator
- 31: Lasche

## Patentansprüche

1. Heuwerbungsmaschine (10),
mit einem Grundgestell (11), welches einen Längsholm (12) aufweist,
mit einem Fahrwerk (14), welches Laufräder (15) aufweist, wobei sich das Grundgestell (11) über den Längsholm (12) am Fahrwerk (14) und über die Laufräder (15) des Fahrwerks (14) auf einem zu bearbeitenden Untergrund abstützt,
mit Rechkreiseln (16), wobei jeder Rechkreisel (16) am Grundgestell (11) mittels eines Auslegerarms (17) schwenkbar oder klappbar angelenkt ist, um den jeweiligen Rechkreisel (16) zwischen einer Arbeitsstellung und einer Transportstellung zu verlagern, und wobei sich jeder Rechkreisel (16) in der Arbeitsstellung über Tast- und Stützräder (20) auf dem zu bearbeitenden Untergrund abstützt
mit einem kraftbetriebenen Mechanismus (21), über den das Grundgestell (11) mit den angelenkten Rechkreiseln (16) relativ zum Fahrwerk (14) zwischen einer Transportstellung und einer Arbeitsstellung anhebbar und absenkbar ist, **dadurch gekennzeichnet, dass**
Holme (22, 23) des Fahrwerks (14), an welchen die Laufräder (15) des Fahrwerks (14) angreifen, über den kraftbetrieben Mechanismus (21) relativ zum Längsholm (12) des Grundgestells (11) unter Veränderung eines sich quer zur Längsrichtung des Längsholms (12) erstreckenden Abstands der Laufräder (15) verlagerbar sind.

2. Heuwerbungsmaschine nach Anspruch 1, **dadurch gekennzeichnet, dass** ein erster Holm (22) des Fahrwerks (14), der ein erstes Laufrad (15) trägt und an einer ersten Seite des Längsholms (12) positioniert ist, über mindestens einen ersten Lenker (24) am Längsholm (12) angreift, wobei an einem ersten Ende des ersten Lenkers (24) eine sich in Längsrichtung des Längsholms (12) erstreckende Schwenkachse (25) zwischen dem ersten Lenker (24) und dem ersten Holm (22) des Fahrwerks und an einem gegenüberliegenden zweiten Ende des ersten Lenkers (24) eine sich in Längsrichtung des Längsholms (12) erstreckende Schwenkachse (26) zwischen dem ersten Lenker (24) und dem Längsholm (12) ausgebildet ist.

3. Heuwerbungsmaschine nach Anspruch 2, **dadurch gekennzeichnet, dass** der erste Holm (22) des Fahrwerks (14) über mindestens zwei erste Lenker (24) am Längsholm (12) angreift.

4. Heuwerbungsmaschine nach Anspruch 2 oder 3, **dadurch gekennzeichnet, dass** ein zweiter Holm (23) des Fahrwerks (12), der ein zweites Laufrad (15) trägt und an einer zweiten Seite des Längsholms (12) positioniert ist, über mindestens einen zweiten Lenker (27) am Längsholm (12) angreift, wobei an einem ersten Ende des zweiten Lenkers (23) eine sich in Längsrichtung des Längsholms (12) erstreckende Schwenkachse (28) zwischen dem zweiten Lenker (27) und dem zweiten Holm (23) des Fahrwerks und an einem gegenüberliegenden zweiten Ende des zweiten Lenkers (27) eine sich in Längsrichtung des Längsholms (12) erstreckende Schwenkachse (29) zwischen dem zweiten Lenker (27) und dem Längsholm (12) ausgebildet ist.

5. Heuwerbungsmaschine nach Anspruch 4, **dadurch gekennzeichnet, dass** der zweite Holm (23) des Fahrwerks (14) über mindestens zwei zweite Lenker (27) am Längsholm (12) angreift.

6. Heuwerbungsmaschine nach einem der Ansprüche 2 und 4, **dadurch gekennzeichnet, dass** der kraftbetriebene Mechanismus (21) Aktuatoren (30) aufweist, welche einerseits an den ersten und zweiten Holmen (22, 23) des Fahrwerks (14) und anderseits an dem Längsholm (12) des Grundgestells (11) oder an einer fest mit dem Längsholm (12) verbundenen Lasche (31) angreifen.

7. Heuwerbungsmaschine nach Anspruch 6, **dadurch gekennzeichnet, dass** die Aktuatoren (30) Druckmittelzylinder sind.

8. Heuwerbungsmaschine nach einem der Ansprüche 1 bis 7, **dadurch gekennzeichnet, dass** dann, wenn der kraftbetriebene Mechanismus (21) das Grundgestell (11) und das Fahrwerk (14) von der Arbeitsstellung in die Transportstellung verlagert, der Längsholm (12) sich absenkt und der sich quer zur Längsrichtung des Längsholms (12) erstreckende Abstand der Laufräder (15) sich verkleinert.

9. Heuwerbungsmaschine nach einem der Ansprüche 1 bis 8, **dadurch gekennzeichnet, dass** dann, wenn der kraftbetriebene Mechanismus (21) das Grundgestell (11) und das Fahrwerk (14) von der Transportstellung in die Arbeitsstellung verlagert, der Längsholm (12) sich anhebt und der sich quer zur Längsrichtung des Längsholms (12) erstreckende Abstand der Laufräder (15) sich vergrößert.

## Claims

1. A hay making machine (10),
having a main frame (11) which has a longitudinal support bar (12), having a chassis (14) which has running wheels (15), wherein the main frame (11) is supported on the chassis (14) via the longitudinal support bar (12) and is supported on ground to be worked via the running wheels (15) of the chassis (14),
having rotary rakes (16), wherein each rotary rake (16) is pivotably or hingedly articulated on the main frame (11) by means of a boom arm (17) in order to displace the respective rotary rake (16) between a working position and a transport position, and wherein, when in the working position, each rotary rake (16) is supported on the ground to be worked via feeler and support wheels (20),
having a power operated mechanism (21) via which the main frame (11) with the articulated rotary rakes (16) can be raised and lowered relative to the chassis (14) between a transport position and a working position, **characterized in that**
struts (22, 23) of the chassis (14) onto which the running wheels (15) of the chassis (14) engage can be displaced relative to the longitudinal support bar (12) of the main frame (11) by means of the power operated mechanism (21), along with a change to a separation of the running wheels (15) extending transversely to the longitudinal direction of the longitudinal support bar (12).

2. The hay making machine according to claim 1, **characterized in that** a first strut (22) of the chassis (14) which carries a first running wheel (15) and is positioned on a first side of the longitudinal support bar (12) engages on the longitudinal support bar (12) via at least one first connecting rod (24), wherein at a first end of the first connecting rod (24), a pivotal axis (25) which extends in the longitudinal direction of the longitudinal support bar (12) between the first connecting rod (24) and the first strut (22) of the chassis, and at the opposite, second end of the first connecting rod (24), a pivotal axis (26) which extends in the longitudinal direction of the longitudinal support bar (12) is formed between the first connecting rod (24) and the longitudinal support bar (12).

3. The hay making machine according to claim 2, **characterized in that** the first strut (22) of the chassis (14) engages on the longitudinal support bar (12) via at least two first connecting rods (24).

4. The hay making machine according to claim 2 or claim 3, **characterized in that** a second strut (23) of the chassis (14) which carries a second running wheel (15) and is positioned on a second side of the longitudinal support bar (12) engages on the longitudinal support bar (12) via at least one second connecting rod (27), wherein at a first end of the second connecting rod (23), a pivotal axis (28) which extends in the longitudinal direction of the longitudinal support bar (12) is formed between the second connecting rod (27) and the second strut (23) of the chassis, and at an opposite second end of the second connecting rod (27), a pivotal axis (29) which extends in the longitudinal direction of the longitudinal support bar (12) is formed between the second connecting rod (27) and the longitudinal support bar (12).

5. The hay making machine according to claim 4, **characterized in that** the second strut (23) of the chassis (14) engages on the longitudinal support bar (12) via at least two second connecting rods (24).

6. The hay making machine according to one of claims 2 and 4, **characterized in that** the power operated mechanism (21) has actuators (30) which on the one hand engage on the first and second struts (22, 23) of the chassis (14), and on the other hand engage on the longitudinal support bar (12) of the main frame (11) or on a bracket (31) which is firmly attached to the longitudinal support bar (12).

7. The hay making machine according to claim 6, **characterized in that** the actuators (30) are hydraulic cylinders.

8. The hay making machine according to one of claims 1 to 7, **characterized in that** in the case in which the power operated mechanism (21) displaces the main frame (11) and the chassis (14) from the working position into the transport position, the longitudinal support bar (12) is lowered and the separation of the running wheels (15) extending transversely to the longitudinal direction of the longitudinal support bar (12) becomes smaller.

9. The hay making machine according to one of claims 1 to 8, **characterized in that** in the case in which the power operated mechanism (21) displaces the main frame (11) and the chassis (14) from the transport position into the working position, the longitudinal support bar (12) is raised and the separation of the running wheels (15) extending transversely to the longitudinal direction of the longitudinal support bar (12) becomes larger.

## Revendications

1. Machine de fenaison (10),
comprenant un bâti (11) qui comporte un longeron (12),
comprenant un train de roulement (14) qui comporte des roues de roulement (15), le bâti (11) prenant appui sur le train de roulement (14) par l'intermédiaire du longeron (12) et sur un sol à travailler par l'intermédiaire des roues de roulement (15) du train de roulement (14),
comprenant des rotors de râtelage (16), chaque rotor de râtelage (16) étant articulé sur le bâti (11) de manière pivotante ou pliante au moyen d'un bras (17) afin de déplacer le rotor de râtelage respectif (16) entre une position de travail et une position de transport et, dans la position de travail, chaque rotor de râtelage (16) prenant appui sur le sol à travailler par l'intermédiaire de roues de palpage et d'appui (20),
comprenant un mécanisme motorisé (21) par l'intermédiaire duquel le bâti (11) avec les rotors de râtelage articulés (16) peut être levé ou descendu par rapport au train de roulement (14) entre une position de transport et une position de travail, **caractérisée en ce que**,
par l'intermédiaire du mécanisme motorisé (21), des montants (22, 23) du train de roulement (14), sur lesquels agissent les roues de roulement (15) du train de roulement (14), sont déplaçables par rapport au longeron (12) du bâti (11) en modifiant un écartement des roues de roulement (15) s'étendant transversalement à la direction longitudinale du longeron (12).

2. Machine de fenaison selon la revendication 1, **caractérisée en ce qu'**un premier montant (22) du train de roulement (14), lequel porte une première roue de roulement (15) et est positionné sur un premier côté du longeron (12), agit sur le longeron (12) par l'intermédiaire d'au moins un premier levier (24), à une première extrémité du premier levier (24) étant conformé entre le premier levier (24) et le premier montant (22) un axe de pivotement (25) s'étendant dans la direction longitudinale du longeron (12) et, à une seconde extrémité opposée du premier levier (24), étant conformé entre le premier levier (24) et le longeron (12) un axe de pivotement (26) s'étendant dans la direction longitudinale du longeron (12).

3. Machine de fenaison selon la revendication 2, **caractérisée en ce que** le premier montant (22) du train de roulement (14) agit sur le longeron (12) par l'intermédiaire d'au moins deux premiers leviers (24).

4. Machine de fenaison selon la revendication 2 ou 3, **caractérisée en ce qu'**un second montant (23) du train de roulement (14), lequel porte une seconde roue de roulement (15) et est positionné sur un second côté du longeron (12), agit sur le longeron (12) par l'intermédiaire d'au moins un second levier (27), à une première extrémité du second levier (27) étant conformé entre le second levier (27) et le second montant (23) un axe de pivotement (28) s'étendant dans la direction longitudinale du longeron (12) et, à une seconde extrémité opposée du second levier (27), étant conformé entre le second levier (27) et le longeron (12) un axe de pivotement (29) s'étendant dans la direction longitudinale du longeron (12).

5. Machine de fenaison selon la revendication 2, **caractérisée en ce que** le second montant (23) du train de roulement (14) agit sur le longeron (12) par l'intermédiaire d'au moins deux seconds leviers (27).

6. Machine de fenaison selon une des revendications 2 et 4, **caractérisée en ce que** le mécanisme motorisé (21) comporte des actionneurs (30) qui agissent, d'une part, sur les premier et second montants (22, 23) du train de roulement (14) et, d'autre part, sur le longeron (12) du bâti (11) ou sur une plaque (31) solidarisée au longeron (12).

7. Machine de fenaison selon la revendication 6, **caractérisée en ce que** les actionneurs (30) sont des vérins à fluide sous pression.

8. Machine de fenaison selon une des revendications 1 à 7, **caractérisée en ce que** lorsque le mécanisme motorisé (21) déplace le bâti (11) et le train de roulement (14) de la position de travail à la position de transport, le longeron (12) descend et l'écartement des roues de roulement (15) s'étendant transversalement à la direction longitudinale du longeron (12) diminue.

9. Machine de fenaison selon une des revendications 1 à 8, **caractérisée en ce que** lorsque le mécanisme motorisé (21) déplace le bâti (11) et le train de roulement (14) de la position de transport à la position de travail, le longeron (12) monte et l'écartement des roues de roulement (15) s'étendant transversalement à la direction longitudinale du longeron (12) augmente.
